# EUROPÄISCHE PATENTSCHRIFT

(11) **EP 1 334 588 B1**
(45) Veröffentlichungstag und Bekanntmachung des Hinweises auf die Patenterteilung: **15.03.2006**
(21) Anmeldenummer: 01996953.4
(22) Anmeldetag: 16.11.2001
(51) Int. Cl.: H04L 12/28, H04L 12/56

(54) **VERFAHREN ZUR AUSWAHL VON KOMMUNIKATIONSNETZEN ANHAND DYNAMISCH EINSTELLBARER AUSWAHLKRITERIEN ZUR STEUERUNG EINES VERBINDUNGSAUFBAUS ZWISCHEN KOMMUNIKATIONSENDSTELLEN**
METHOD FOR SELECTING COMMUNICATION NETWORKS BY MEANS OF DYNAMICALLY ADJUSTABLE SELECTION CRITERIA FOR CONTROLLING A LINK SET UP BETWEEN TWO TERMINALS
PROCEDE POUR SELECTIONNER DES RESEAUX DE COMMUNICATION A L'AIDE DE CRITERES DE SELECTION A REGLAGE DYNAMIQUE AFIN DE COMMANDER L'ETABLISSEMENT D'UNE CONNEXION ENTRE DES TERMINAUX DE COMMUNICATION

(30) Priorität: 17.11.2000 DE 10056944
(43) Veröffentlichungstag der Anmeldung: 13.08.2003
(73) Patentinhaber: SIEMENS AKTIENGESELLSCHAFT, 80333 München (DE)
(72) Erfinder: BRUMM, Thomas, 82131 Gauting-Königswiesen (DE)
(86) Internationale Anmeldenummer: PCT/DE2001/004321
(87) Internationale Veröffentlichungsnummer: WO 2002/041583

(56) Entgegenhaltungen:
- EP-A- 0 848 560
- FR-A- 2 770 722
- US-A- 6 104 720

## Beschreibung

Die Erfindung bezieht sich auf ein Verfahren zur Auswahl von Kommunikationsnetzen an Hand dynamisch einstellbarer Auswahlkriterien zur Steuerung eines Verbindungsaufbaus zwischen Kommunikationsendstellen und damit zur Übertragung von Kommunikations-, Sprach- und Datensignalen, also generell von Signalen, über ein Kommunikationsnetz von zumindest zwei Kommunikationsnetzen, von denen ein Kommunikationsnetz durch ein für die Übertragung von Sprachsignalen vorgesehenes Kommunikationsnetz, insbesondere durch ein Zeitmultiplex-Kommunikationsnetz, und ein anderes Kommunikationsnetz durch ein paketorientiertes Kommunikationsnetz, insbesondere durch das Internet, gebildet ist, wobei die Auswahl des jeweiligen Kommunikationsnetzes in einer die betreffende Kommunikationsendstelle mit den genannten Kommunikationsnetzen verbindenden Netzzugangs- und -auswahleinrichtung an Hand einer von der betreffenden Kommunikationsstelle abgegebenen Angabe steuerbar ist.

Es ist bereits bekannt (US-PS 5.732.078), Datenpakete entweder über ein paketvermittelndes Netz, insbesondere das Internet, oder über zumindest ein alternatives Netz, insbesondere ein Zeitmultiplex-Kommunikationsnetz, zu übertragen. Um Datenpakete, die üblicherweise über das paketvermittelnde Netz übertragen werden, auf zumindest eines der verfügbaren alternativen Netze umzuleiten, ist dabei vorgesehen, zunächst eine Prüfverbindung zwischen dem Zugangsknoten, an dem eine die betreffenden Datenpakete abgebende Kommunikationsendeinrichtung angeschlossen ist, und einem zielknoten aufzubauen, im Zuge der überprüft wird, ob die für die zu übertragenden Datenpakete geforderte Bandbreite überhaupt bereitgestellt werden kann. Falls im Zielknoten nicht die geforderte Bandbreite bereitgestellt werden kann, die im Zugangsknoten möglich ist, kommt es zu einem Aushandeln einer möglichen Bandbreite zwischen den erwähnten Knoten. Um im Anschluß an eine solche Prüfverbindung eine Übertragung von Datenpaketen über eine geforderte Bandbreite bereitstellendes alternatives Netz durchführen zu können, ist gemäß dem betreffenden Stand der Technik vorgesehen, eine vorhandene Routing-Tabelle derart zu modifizieren, dass sie neben den jeweiligen Zieladressen der Knoten, an die Datenpakete jeweils weiterzuleiten sind, zusätzlich zumindest die Ursprungsadressen der aufgrund einer vom Benutzer geforderten Qualität umzuleitenden Datenpakete und gegebenenfalls zusätzlich eine Applikationportnumber enthält.

Bei dem vorstehend betrachteten Stand der Technik erfolgt somit nach Aufbau einer Prüfverbindung zwischen Ursprungs- und Zielknoten sodann gewissermaßen übertragungsindividuell für die Übertragung von Datenpaketen bei sichergestellter Bandbreite eine im einzelnen vorzunehmende Modifizierung einer Routing-Tabelle. Dies bedeutet aber, dass dieses bekannte Verfahren sehr aufwendig ist, da für jede von einem Benutzer veranlaßte Übertragung von Datenpaketen mit einer geforderten Bandbreite eine eigene Verbindung aufgebaut werden muß, und zwar über das alternative Netz, und dass in jedem Zugangsknoten nach jeder von einem Benutzer veranlaßten Übertragung von Datenpaketen mit einer bestimmten Bandbreite die erwähnte Routing-Tabelle modifiziert werden muß.

Es ist nun auch schon ein Verfahren zur Umleitung von Datenpaketen, die grundsätzlich über ein paketvermittelndes Netz, insbesondere dem Internet, zu übertragen sind, auf zumindest ein alternatives Netz, insbesondere einem Zeitmultiplexnetz, bekannt (WO 00/08798), das eine für diese Datenpakete geforderte Qualitätsgüte sicherstellt. Das paketvermittelnde Netz und das zumindest eine alternative Netz bilden dabei Teilnetze eines Kommunikationsnetzes, das aus zumindest einem Ursprungsknoten und zumindest einem Zielknoten besteht, die jeweils direkt oder indirekt über wenigstens einen Zwischenknoten mit einem Zugangsknoten verbunden sind, der eine Verbindung sowohl zum paketvermittelnden Netz als auch zu einem alternativen Netz herstellen kann und zwischen denen Datenpakete übertragen werden können. Bei diesem bekannten Verfahren werden für die Umleitung der Datenpakete über ein die für diese Datenpakete geforderte Qualitätsgüte sicherstellendes alternatives Netz die betreffenden Datenpakete in ihrem Ursprungsknoten lediglich jeweils durch ein dem mit dem Ursprungsknoten direkt oder indirekt über wenigstens einen Zwischenknoten verbundenen Zugangsknoten für eine solche Umleitung bekanntes Bitmuster gekennzeichnet. Beim Eintreffen solcher durch das betreffende Bitmuster jeweils gekennzeichneter Datenpakete im Zugangsknoten wird allein aus dem Erkennen des betreffenden Bitmusters eine Umleitung der mit betreffenden Bitmuster gekennzeichneten Datenpakete auf ein alternatives Netz veranlaßt. Damit ist im Unterschied zu dem eingangs aufgezeigten ersten Verfahren bei dem gerade betrachteten zweiten Verfahren lediglich eine einmalige Kennzeichnung der zu übertragenden Datenpakete mit einem bekannten Bitmuster erforderlich, um die Übertragung der betreffenden Datenpakete über ein alternatives Netz zu bewirken. Diese Kennzeichnung erfolgt dabei in der Regel in der Kommunikationsendstelle, von der die Datenpakete abgegeben werden.

Es ist nun auch schon aus EP0848560 ein Verfahren zur Verbesserung der Qualität eines Dienstes bekannt.

Es hat sich nun gezeigt, dass die vorstehend betrachteten bekannten Maßnahmen bezüglich der Übertragung von Datenpaketen, die normalerweise über ein paketorientiertes Netz übertragen werden, über ein alternatives Netz zuweilen nicht ausreichen, um unterschiedliche Gegebenheiten in den Netzen und/oder hinsichtlich der Art der Signale in optimaler Weise zu berücksichtigen. Bei dem aus dem eingangs genannten Dokument US-PS 5.732.078 bekannten Verfahren wird der jeweilige Verbindungsweg aufgrund empfangsseitiger Bedingungen festgelegt. Bei dem aus dem oben genannten Dokument WO 00/08798 bekannten Verfahren wird der jeweilige Verbindungsweg aufgrund administrativ vorgegebener Kennzahlen festgelegt, die sendeseitig mitgegeben werden.

Der Erfindung liegt demgemäß die Aufgabe zugrunde, einen Weg zu zeigen, wie bei einem Verfahren der eingangs genannten Art auf relativ einfache Weise nicht nur die von der jeweiligen Kommunikationsendeinrichtung her vorliegenden Wünsche hinsichtlich der Benutzung eines Kommunikationsnetzes berücksichtigt werden können, sondern wie überdies zugleich auch die einzelnen verfügbaren Kommunikationsnetze betreffende Angaben und/oder die jeweils zu übertragenden Signale selbst betreffende Angaben in optimaler Weise mit berücksichtigt werden können.

Gelöst wird die vorstehend aufgezeigte Aufgabe bei einem Verfahren der eingangs genannten Art erfindungsgemäß dadurch, dass die genannte Angabe in der Netzzugangs- und -auswahleinrichtung nach Maßgabe einer in dieser zusätzlich vorliegenden Information und/oder nach Maßgabe einer die genannten Kommunikationsnetze betreffenden Information bewertet werden und dass als Ergebnis dieser Bewertung von der Netzzugangs- und -auswahleinrichtung das für die jeweilige Übertragung derjeweiligen Signale in Frage kommende Kommunikationsnetz aus den vorhandenen Kommunikationsnetzen ausgewählt wird.

Die Erfindung bringt den Vorteil mit sich, dass nicht nur die von der jeweiligen Kommunikationsendstelle gelieferte Angabe über das für die Übertragung von Signalen zu benutzende Kommunikationsnetz berücksichtigt wird, sondern dass vielmehr gewissermaßen durch eine zweidimensionale Erfassung gerade auch die in der Netzzugangs- und -auswahleinrichtung vorhandenen bzw. von dieser jeweils erhältlichen zusätzlichen Informationen über den Netzzugang in optimaler Weise mit berücksichtigt werden können.

Gegenüber dem aus dem Dokument US-PS 5.732.078 bekannten Verfahren bringt die vorliegende Erfindung den Vorteil mit sich, dass sie grundsätzlich keine empfangsseitigen Daten für eine Netzauswahl benötigt, und gegenüber dem aus dem oben genannten Dokument WO 00/08798 bekannten Verfahren bringt die Erfindung den Vorteil mit sich, dass sie keine fixierte Wegeleitung erfordert, sondern mit einer dynamisch einstellbaren Netzauswahl und damit Wegeleitung arbeitet.

Zweckmäßige Weiterbildungen der Erfindung ergeben sich aus den Unteransprüchen.

So kann die genannte Angabe in der Netzzugangs- und -auswahleinrichtung dem mit diesem verbundenen Kommunikationsendgerät zugeordnet sein oder sie kann von dem betreffenden Kommunikationsendgerät mit signalisiert werden. Ausserdem kann die genannte Angabe implizit aus dem Dienstekriterium beim Verbindunsaufbau abgeleitet werden, wobei eine administrierbare Tabelle in der zugehörigen Netzzugangs- und -auswahleinrichtung die Zuordung zwischen Dienst und bevorzugtem Netz herstellt. Ausserdem kann die genannte Angabe aus einem gesonderten Kriterium ermittelt werden, das Informationen über die angeschlossenen Netze beinhaltet, wie Netzauslastung, Kosten oder Priorisierung eines Netzes. Eine einstellbare Priorisierung erlaubt die Festlegung einer Angabe aus den gesammelten Angaben. Dabei läßt sich die Festlegung durch eine logische Verknüpfung der einzelnen Angaben erzeugen.

So wird gemäß zweckmäßiger Ausgestaltung der Erfindung mit der für die Kommunikationsendstelle abgegebenen Angabe lediglich das bevorzugt für die Übertragung der Signale zu benutzende Kommunikationsnetz bezeichnet, und das für die Übertragung der betreffenden Signale von der Netzzugangs- und -auswahleinrichtung tatsächlich ausgewählte Kommunikationsnetz wird nach Maßgabe eines die Art der jeweiligen Signale betreffenden Dienstekriteriums bestimmt. Dabei kann eine in der Netzzugangs- und -auswahleinrichtung administrierbare Tabelle die Zuordnung zwischen dem jeweiligen Dienst und dem bevorzugten Kommunikationsnetz herstellen. So können beispielsweise von der jeweiligen Kommunikationsendstelle abgegebene Faksimiledaten nach dem betreffenden Dienstekriterium über ein paketvermittelndes Netz, wie das Internet, übertragen werden, obwohl von der betreffenden Kommunikationsendstelle als bevorzugtes Netz beispielsweise ein Zeitmultiplex-Vermittlungsnetz angegeben worden ist.

Vorzugsweise wird in dem Fall, dass mit der für die jeweilige Kommunikationsendstelle abgegebenen Angabe das bevorzugt für die Übertragung der jeweiligen Signale zu benutzende Kommunikationsnetz bezeichnet wird, das für die Übertragung der betreffenden Signale von der Netzzugangs- und -auswahleinrichtung tatsächlich ausgewählte Kommunikationsnetz nach dieser Maßgabe bestimmt.

Vorzugsweise wird in dem Fall, dass mit der für die betreffende Kommunikationsendstelle abgegebenen Angabe lediglich das bevorzugt für die Übertragung der jeweiligen Signale zu benutzende Kommunikationsnetz bezeichnet wird, das für die Übertragung der betreffenden Signale von der Netzzugangs- und -auswahleinrichtung tatsächlich ausgewählte Kommunikationsnetz nach Maßgabe eines von der Kommunikationsendstelle mitgelieferten Angabe bestimmt. Von dieser Maßnahme wird man insbesondere in dem Fall Gebrauch machen, dass in der Netzzugangs- und -auswahleinrichtung kein gesonderter Aufwand für die Speicherung von dort zu berücksichtigenden gesonderten Kriterien getroffen werden soll.

Von Vorteil ist es allerdings auch, wenn in dem Fall, dass mit der für die Kommunikationsendstelle abgegebenen Angabe lediglich das bevorzugt für die Übertragung der jeweiligen Signale zu benutzende Kommunikationsnetz bezeichnet wird, das für die Übertragung der betreffenden Signale von der Netzzugangs- und -auswahleinrichtung tatsächlich ausgewählte Kommunikationsnetz nach Maßgabe eines in der Netzzugangs- und -auswahleinrichtung gebildeten gesonderten Kriteriums bestimmt wird. Für die Bildung eines solchen Kriteriums können von der jeweiligen Kommunikationsendstelle zusätzlich zu der von dieser gelieferten Angabe bereitgestellte zusätzliche Angaben und/oder von den Betreibern der verschiedenen Netze zur Verfügung gestellte Informationen, beispielsweise über die Netzverfügbarkeit, berücksichtigt werden.

Von Vorteil ist es ferner, als das gesonderte Kriterium eine Belastung der für die Netzzugangs- und -auswahleinrichtung auswählbaren Kommunikationsnetze und/oder für die Nutzung der betreffenden Kommunikationsnetze aufzuwendende Kosten heranzuziehen. Dadurch läßt sich eine besonders optimale Netznutzung für die jeweils zu übertragenden Signale erreichen.

Von Vorteil ist es außerdem, als das gesonderte Kriterium in der Netzzugangs- und -auswahleinrichtung eine Priorisierung der Nutzung der für die Übertragung der jeweiligen Signale verfügbaren Kommunikationsnetze vorzunehmen.

Zur Bewertung der verschiedenen Angaben beziehungsweise der aus den gesonderten Kriterien abgeleiteten Angaben ist es möglich, die verschiedenen Angaben zu priorisien, um dadurch die auszuführende Angabe durch eine logische Verknüpfung zu bestimmen. So ist es zum Beispiel möglich, einen Sprachdienst bzw. Sprachsignale priorisiert über ein Sprachnetz zu leiten und im Fall eines Überlastzustandes des Sprachnetzes ein Paketnetz zu wählen. Auf diese Weise lässt sich eine besonders optimale Nutzung der verfügbaren Kommunikationsnetze anhand unterschiedlicher Kriterien vornehmen.

Anhand einer Zeichnung wird die Erfindung nachstehend beispielsweise näher erläutert.

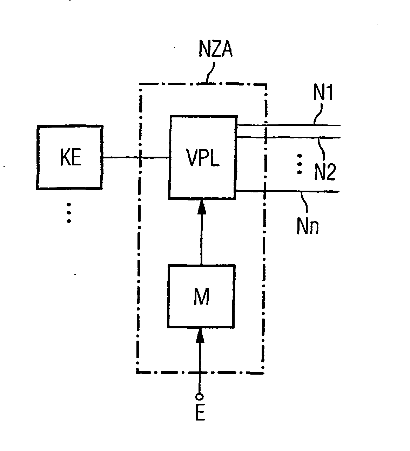

In der Zeichnung ist in einem Blockschaltbild eine Netzzugangs- und -auswahleinrichtung als Verbindungseinrichtung zwischen einer Kommunikationsendstelle und verschiedenen Kommunikationsnetzen veranschaulicht.

In der Zeichnung ist eine Kommunikationsendstelle KE eines Kommunikationssystems dargestellt, welches eine Vielzahl entsprechender Kommunikationsendeinrichtungen enthält. Eine Kommunikationsendeinrichtung kann dabei ein oder mehrere Endgeräte enthalten, wie zum Beispiel einen digitalen oder analogen Fernsprechapparat, ein Faksimile- bzw. Faxgerät, eine Datenübertragungseinrichtung, einen Personalcomputer, eine Bildübertragungseinrichtung, etc. Die in der Zeichnung dargestellte Kommunikationsendeinrichtung KE ist an einer Netzzugangs- und -auswahleinrichtung NZA angeschlossen, die mit einer Reihe von Kommunikationsnetzen N1, N2 bzw. Nn verbunden ist. Von diesen Kommunikationsnetzen N1, N2 bis Nn ist zumindest ein Kommunikationsnetz, beispielsweise das Kommunikationsnetz N1, ein für die Übertragung von Sprachsignalen vorgesehenes Kommunikationsnetz, insbesondere ein Zeitmultiplex-Kommunikationsnetz, wie es beispielsweise durch das in der Praxis eingeführte Vermittlungssystem EWSD gebildet ist. Wenigstens ein anderes Kommunikationsnetz der betreffenden Kommunikationsnetze N1, N2 bis Nn, beispielsweise das Kommunikationsnetz N2, ist durch ein paketorientiertes Kommunikationsnetz, insbesondere durch das Internet gebildet. Grundsätzlich können über sämtliche Kommunikationsnetze N1, N2 bis Nn, die von der Netzzugangs- und -auswahleinrichtung NZA aus erreichbar und für die jeweilige Signalübertragung auswählbar sind, Signale von und zu sämtlichen Kommunikationsendeinrichtungen, wie der Kommunikationsendeinrichtung KE übertragen werden. Dies heißt, dass Sprachsignale nicht nur über das für die Übertragung von Sprachsignalen vorgesehene Kommunikationsnetz N1 übertragbar sind, sondern durchaus auch über das paketorientierte Kommunikationsnetz N2, insbesondere das Internet. Umgekehrt sind Datensignale, wie sie beispielsweise von Faksimilegeräten geliefert werden, nicht nur über das paketorientierte Kommunikationsnetz N2 übertragbar, sondern selbstverständlich auch über das für die Übertragung von Sprachsignalen vorgesehene Kommunikationsnetz N1.

Für die Auswahl des für die Übertragung der jeweiligen Signale jeweils zu benutzenden Kommunikationsnetzes der Kommunikationsnetze N1, N2 bis Nn wird bzw. ist für die jeweilige Kommunikationsendeinrichtung, wie für die Kommunikationsendeinrichtung KE zunächst eine erste Angabe an der Netzzugangs- und -auswahleinrichtung NZA administriert. Diese Angabe bezeichnet in der Regel das bevorzugt für die Übertragung der jeweiligen Signale zu benutzende Kommunikationsnetz. Die betreffende Angabe wird in der Netzzugangs- und -auswahleinrichtung NZA einer Verknüpfungs- und Prioritätslogik VPL zugeführt. Diese ist eingangsseitig mit der Ausgangsseite eines Speichers M verbunden , dem an einem gesonderten Eingangsanschluß E noch weitere Angaben zur Einspeicherung zuführbar sind. Diese jeweiligen weiteren Angaben stellen zusätzliche Angaben dar, die damit in der Netzzugangs- und -auswahleinrichtung NZA vorliegen und/oder die damit in der Verknüpfungs- und Prioritätslogik VPL zu einer Bewertung der von der jeweilige Kommunikationsendeinrichtung KE gelieferten Angabe für die Auswahl des für die jeweilige Übertragung von Signalen in Frage kommenden Kommunikationsnetzes aus den Kommunikationsnetzen N1, N2 bis Nn herangezogen werden. Damit werden die von der jeweiligen Kommunikationsendeinrichtung, wie der Kommunikationsendeinrichtung KE, bereitgestellten Angaben über das jeweils zu benutzende bzw. gewünschte Kommunikationsnetz und die in der Netzzugangs- und -auswahleinrichtung NZA vorliegenden oder von dort aus zugeführten zusätzlichen Angaben abgeleiteten bzw. gebildeten gesonderten Informationen bezüglich des auszuwählenden Kommunikationsnetzes also gewissermaßen in einer zweidimensionalen Weise verarbeitet, um als Ergebnis dieses Vorgangs das tatsächlich für die jeweilige Übertragung von Signalen zu benutzende Kommunikationsnetz auszuwählen.

Bei von der jeweiligen Kommunikationsendstelle bereitgestellter Angabe über das bevorzugt für die jeweilige Übertragung von Signalen zu benutzende Kommunikationsnetz kann also ein in dem erwähnten Speicher M enthaltenes gesondertes Kriterium berücksichtigt werden, welches beispielsweise die Verfügbarkeit oder Auslastung der von der Netzzugangs- und -auswahleinrichtung NZA auswählbaren Kommunikationsnetze und/oder die für die Nutzung der betreffenden Kommunikationsnetze aufzuwendenden Kosten berücksichtigt. Zusätzlich oder anstelle dieser Angaben können aber auch von der jeweiligen Kommunikationsendstelle KE bereitgestellte gesonderte Kriterien für die Auswahl des jeweils zu benutzenden Kommunikationsnetzes herangezogen werden, wie ein Dienstekriterium, welches Auskunft über die Art der jeweils zu übertragenden Signale liefert, oder andere mitgelieferte gesonderte Kriterien, wie eine Qualitätsforderung für die jeweilige Signalübertragung.

Überdies ist es auch möglich, durch die Verknüpfungs- und Prioritätslogik VPL der Netzzugangs- und -auswahleinrichtung NZA eine Priorisierung der Nutzung der für die Übertragung der jeweiligen Signale verfügbaren Kommunikationsnetze N1, N2 bis Nn vornehmen zu lassen. Für die Festlegung der Prioritätsreihenfolge können dabei unterschiedlichste Kriterien der vorstehend aufgeführten Kriterien herangezogen werden.

Durch die vorstehend erläuterten Maßnahmen können die für die Übertragung von Signalen verfügbaren Kommunikationsnetze den unterschiedlichsten Bedürfnissen bzw. Wünschen seitens der jeweiligen Kommunikationsendstelle und entsprechend den jeweils vorliegenden Gegebenheiten seitens der Kommunikationsnetze und/oder der Netzbetreiber optimal genutzt werden.

Die Netzauswahl anhand der beschriebenen Angaben erfordert gegebenenfalls einen entsprechenden Netzübergang. Dieser Netzübergang wird im Falle der in der Zeichnung dargestellten Anordnung sendeseitig von der Netzzugangs- und -auswahleinrichtung NZA festgelegt bzw. gesteuert. Ist der Signaltransport über ein anderes physikalisches Netz erfolgt als das Netz, in dem sich die Empfangseinrichtung, das heißt die empfangsseitige Kommunikationseinrichtung befindet, muss ein Netzübergang in das Netz der betreffenden Empfangseinrichtung stattfinden. So muss eine Verbindung, die über ein Paketnetz geführt wird und die einen Zielteilnehmer im Sprachnetz erreichen will, über einen Netzübergang bzw. eine Netzübergangseinrichtung in das Sprachnetz geführt werden.

## Patentansprüche

1. Verfahren zur Auswahl eines Kommunikationsnetzes aus zumindest zwei Kommunikationsnetzen an Hand eines dynamisch einstellbaren Auswahlkriteriums zur Steuerung eines Verbindungsaufbaus zwischen Kommunikationsendstellen,
- wobei ein Kommunikationsnetz (N1) durch ein Zeitmultiplex-Kommunikationsnetz, und ein anderes Kommunikationsnetz (N2) durch ein paketorientiertes Kommunikationsnetz gebildet wird,
- wobei von der Kommunikationsendstelle (KE) eine Angabe, mit welcher lediglich ein bevorzugt zu benutzendes Kommunikationsnetz bezeichnet wird, an eine Netzzugangs- und -auswahleinrichtung (NZA), welche die Kommunikationsendstelle (KE) mit den Kommunikationsnetzen (N1, N2...Nn) verbindet, übermittelt wird und
- wobei die Auswahl des Kommunikationsnetzes in der Netzzugangs- und -auswahleinrichtung (NZA) an Hand dieser Angabe nach Maßgabe einer in dieser Netzzugangs- und -auswahleinrichtung (NZA) zusätzlich vorliegenden Information und/oder nach Maßgabe einer die Kommunikationsnetze (N1, N2...Nn) betreffenden Information erfolgt,
**dadurch gekennzeichnet,**
- **dass** für die Auswahl zusätzlich ein von der Kommunikationsendstelle (KE) mitgeliefertes gesondertes Kriterium herangezogen wird.

2. Verfahren nach Anspruch 1, **dadurch gekennzeichnet, dass** für die Auswahl ein Dienstekriterium herangezogen wird, welches die Art der von der Kommunikationsendstelle (KE) abgegebenen Signale betrifft.

3. Verfahren nach Anspruch 1, **dadurch gekennzeichnet, dass** das ausgewählte Kommunikationsnetz nach Maßgabe eines in der Netzzugangs- und -auswahleinrichtung (NZA) vorhandenen und/oder dort gebildeten gesonderten Kriteriums bestimmt wird.

4. Verfahren nach Anspruch 3, **dadurch gekennzeichnet, dass** als gesondertes Kriterium eine Belastung der Kommunikationsnetze (N1, N2...Nn) und/oder für die Nutzung der Kommunikationsnetze (N1, N2...Nn) aufzuwendende Kosten herangezogen werden.

5. Verfahren nach Anspruch 3 oder 4, **dadurch gekennzeichnet, dass** in der Netzzugangs- und -auswahleinrichtung (NZA) eine Priorisierung der Nutzung der Kommunikationsnetze (N1, N2...Nn) erfolgt.

## Claims

1. Method for selecting a communication network from at least two communication networks by means of a dynamically adjustable selection criterion for controlling a link set up between terminals,
- in which a communication network (N1) is formed by a time-division multiplex-communication network, and another communication network (N2) is formed by a packet-oriented communication network,
- in which the terminal (KE) transmits a specification, with which only a preferred communication network to be used is indicated, to a network access and selection device (NZA), which connects the terminal (KE) with the communication networks (N1, N2...Nn) and
- in which the selection of the communication network in the network access and selection device (NZA) is made on the basis of this specification in accordance with information available in addition in this network access and selection device (NZA) and/or in accordance with information concerning the communication networks (N1, N2...Nn),
**characterised in that**,
- a separate criterion also supplied by the terminal (KE) is also used for the selection process.

2. Method according to claim 1,
**characterised in that**,
a service criterion is used for the selection, said service criterion relating to the type of signals sent by the terminal (KE).

3. Method according to claim 1,
**characterised in that**,
the communication network selected is determined according to a separate criterion available and/or formed in the network access and selection device (NZA).

4. Method according to claim 3,
**characterised in that**,
as separate criterion, a loading of the communication networks (N1, N2...Nn) and/or costs to be defrayed for the use of the communication networks (N1, N2...Nn) are used.

5. Method according to claim 3 or 4,
**characterised in that**,
priorities are set for the usage of the communication networks (N1, N2...Nn) in the network access and selection device (NZA).

## Revendications

1. Procédé de sélection d'un réseau de communication parmi au moins deux réseaux de communication au moyen d'un critère de sélection réglable dynamiquement pour commander l'établissement d'une connexion entre des terminaux de communication,
- dans lequel on forme un réseau (N1) de communication par un réseau de communication à multiplexage dans le temps et un autre réseau (N2) de communication par un réseau de communication orienté paquet ;
- dans lequel on transmet du terminal (KE) de communication une indication par laquelle on désigne simplement un réseau de communication à utiliser de manière préférée à un dispositif (NZA) d'accès au réseau et de sélection de réseau qui relie les terminaux (KE) de communication aux réseaux (N1, N2, ..., Nn) de communication ; et
- dans lequel on effectue la sélection du réseau de communication dans le dispositif (NZA) d'accès au réseau et de sélection de réseau au moyen de cette indication en fonction d'une information présente surpplémentairement dans ce dispositif (NZA) d'accès au réseau et de sélection de réseau et/ou en fonction d'une information concernant les réseaux (N1, N2, ..., Nn) de communication,
**caractérisé**
- **en ce que** l'on tire parti pour la sélection, en outre, d'un critère particulier fourni par le terminal (KE) de communication.

2. Procédé suivant la revendication 1, **caractérisé en ce que** l'on tire parti pour la sélection d'un critère de service qui concerne le type des signaux émis par le terminal (KE) de communication.

3. Procédé suivant la revendication 1, **caractérisé en ce que** l'on détermine le réseau de communication sélectionné en fonction d'un critère présent dans le dispositif (NZA) d'accès au réseau et de sélection de réseau et/ou qui y est formé.

4. Procédé suivant la revendication 3, **caractérisé en ce que**, comme critère particulier, on tire parti d'une charge des réseaux (N1, N2, ..., Nn) de communication et/ou des coûts pour l'utilisation des réseaux (N1, N2, ..., Nn) de communication.

5. Procédé suivant la revendication 3 ou 4, **caractérisé en ce qu'**on effectue dans le dispositif (NZA) d'accès au réseau et de sélection des réseaux une mise en priorité de l'utilisation des réseaux (N1, N2, ..., Nn) de communication.
